Europäisches Patentamt

European Patent Office

Office européen des brevets

(19)

(11) Numéro de publication: **0 255 788**
**B1**

(12) **FASCICULE DE BREVET EUROPEEN**

(45) Date de publication du fascicule du brevet:
19.09.90

(21) Numéro de dépôt: 87401692.6

(22) Date de dépôt: 20.07.87

(51) Int. Cl.⁵: **B60R 22/44**

(54) Enrouleur de sangle de ceinture de sécurité.

(30) Priorité: 29.07.86 FR 8610974

(43) Date de publication de la demande:
10.02.88 Bulletin 88/6

(45) Mention de la délivrance du brevet:
19.09.90 Bulletin 90/38

(84) Etats contractants désignés:
DE ES GB IT SE

(56) Documents cités:
DE-A- 2 742 676
FR-A- 2 304 362
US-A- 4 529 143
US-A- 4 630 841

(73) Titulaire: ECIA - EQUIPEMENTS ET COMPOSANTS
POUR L'INDUSTRIE AUTOMOBILE, F-25400 Audincourt
(Doubs)(FR)

(72) Inventeur: Escaravage, Gérard, 5 Impasse des
Graverots, F-25700 Valentigney(FR)

(74) Mandataire: Polus, Camille et al, c/o Cabinet
Lavoix 2, Place d'Estienne d'Orves, F-75441 Paris
Cedex 09(FR)

## Description

La présente invention se rapporte à un enrouleur de sangle de ceinture de sécurité, du type comprenant une structure de support dans laquelle est montée à rotation une bobine porte-sangle reliée à des moyens de sécurité et de verrouillage de la sangle et à des moyens de rappel de la sangle en position enroulée sur la bobine.

Dans l'état de la technique, les moyens de rappel de la sangle en position enroulée sur la bobine sont constitués par un ressort spiral dont l'une des extrémités est solidaire de la structure de support et dont l'autre extrémité est solidaire de la bobine porte-sangle de manière à enrouler cette sangle autour de la bobine lorsqu'elle est relâchée.

Ce ressort de rappel est adapté pour entouler la totalité de la sangle sur la bobine. A cet effet, ce ressort est précontraint au montage de l'enrouleur et cette précontrainte se traduit, pout l'utilisateur, par un effort croissant à exercer sur la sangle pour dérouler celle-ci et par une gêne dure à la tension exercée par le ressort sur la sangle lorsque celle-ci est accrochée.

On connaît également d'après le document FR. 2 422 413, un dispositif d'enrouleur-dérouleur d'une sangle de ceinture de sécurité comportant un moteur électrique. Ce moteur électrique permet à la fois d'enrouler la sangle sur la bobine et de la maintenir sous tension contre le corps de l'utilisateur. Dans ce dispositif, le courant électrique fourni au moteur présente une intensité inférieure quand la boucle de ceinture est fermée que lorsqu'elle est ouverte.

Cependant, ce dispositif présente un certain nombre d'inconvénients notamment au niveau de l'alimentation de ce moteur.

Le document US 4 529 143 concerne un enrouleur de sangle de ceinture de sécurité d'un type dont les constituants essentiels sont énumérés dans le préambule de la revendication principale. Toutefois, il y a lieu d'observer que la solution proposée par ce document, d'une part, met en œuvre un pignon intermédiaire qui est sollicité par un ressort particulier spécial, différent du ressort spiral qui assure le rebobinage de la sangle de la ceinture de sécurité sur la bobine et, d'autre part, fait tourner le moteur afin d'entraîner ce pignon de manière à maintenir constante la tension du ressort spiral par réduction du bandage de ce dernier résultant de la traction exercée sur cette sangle, c'est-à-dire fait tourner le moteur dans un sens qui ne favorise pas l'enroulement de la sangle.

Le but de l'invention est donc de résoudre les problèmes mentionnés précédemment en apportant à l'utilisateur un meilleur confort en minimisant l'effort nécessaire pour l'extraction de la sangle et en maîtrisant la pression exercée par la sangle sur l'utilisateur en position accrochée de la sangle.

A cet effet, l'invention a pour objet un enrouleur de sangle de ceinture de sécurité d'un type exposé dans le préambule de la revendication principale et dont les particularités ressortent notamment de la teneur de sa partie caractérisante.

L'invention sera mieux comprise à l'aide de la description qui va suivre, donnée uniquement à titre d'exemple et faite en se référant aux dessins annexés, sur lesquels :

- la Fig.1 représente une vue de face d'un dispositif selon l'invention, dans laquelle certains éléments ont été représentés en coupe partielle pour des raisons de clarté;
- la Fig.2 représente une vue de côté d'un dispositif selon l'invention; et
- les Fig.3, 4 et 5 illustrent le fonctionnement d'un dispositif selon l'invention.

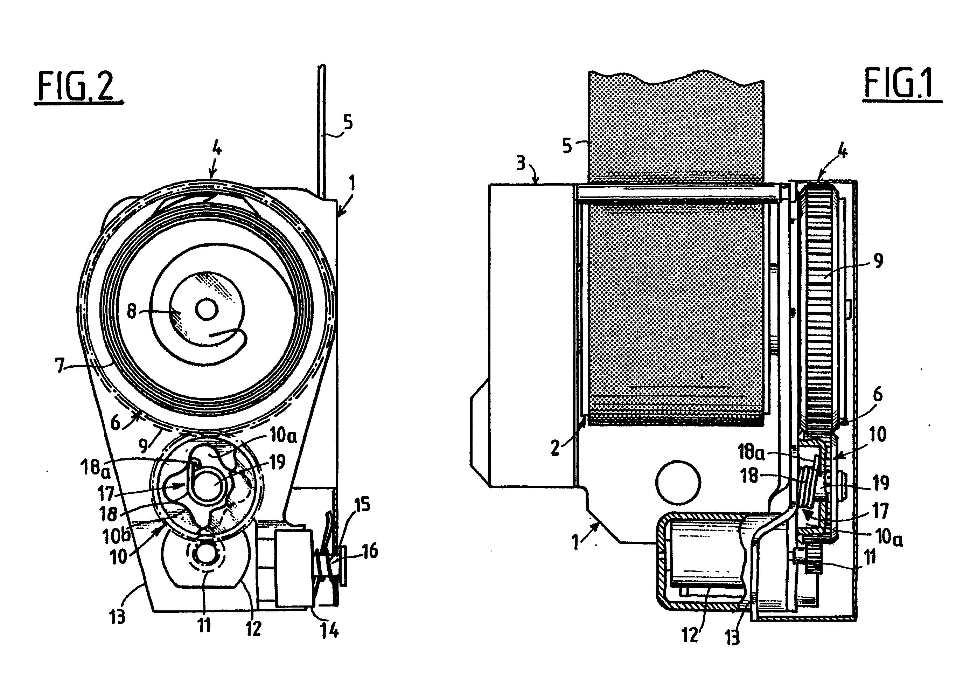

Ainsi qu'on peut le voir sur les Fig.1 et 2, un enrouleur de sangle de ceinture de sécurité comporte une structure de support 1 dans laquelle est montée à rotation une bobine porte-sangle 2 reliée à des moyens connus de sécurité et de verrouillage 3 de la sangle et à des moyens de rappel 4 de la sangle 5 en position enroulée sur la bobine 2.

Ces moyens de rappel 4 comportent un boîtier cylindrique 6 monté à rotation autour de l'axe de ladite bobine 2 et dans lequel est disposé un ressort spiral 7 de tension de la sangle dont une extrémité est fixée sur l'arbre 8 de rotation de la bobine et dont l'autre extrémité est solidaire du boîtier 6. Ce boîtier 6 comporte sur sa périphérie extérieure des moyens d'engrenage 9 coopérant avec un pignon intermédiaire 10 lui-même en prise avec un pignon 11 fixé sur l'arbre de sortie d'un moteur électrique 12.

Le moteur électrique 12 et le pignon intermédiaire 10 sont portés par une platine 13 montée déplaçable angulairement autour de l'axe de la bobine 2 entre un position de désactivation du moteur électrique 12 et une position d'activation de celui-ci comme on le verra par la suite.

Cette commande du moteur électrique 12 est réalisée par l'intermédiaire d'un bouton-poussoir 14 d'alimentation du moteur, qui est actionné par la platine 13 en fonction des déplacements de celle-ci par rapport à la bobine et donc à la structure de support 1.

Il est également à noter que la platine 13 est sollicitée vers sa position d'activation du moteur électrique par un ressort 15 dont l'une des extrémités coopère avec la structure de support 1 et l'autre avec la platine 13, ce ressort 15 étant disposé autour d'un doigt 16 limitant le débattement de la platine.

Le dispositif selon l'invention comporte également des moyens de freinage de la rotation du boîtier 6. Ces moyens de freinage sont avantageusement constitués par des moyens 17 de freinage de la rotation du pignon intermédiaire 10. Ces moyens de freinage 17 sont par exemple constitués par un ressort hélicoïdal 18 disposé autour d'un téton 19 fixé sur la platine, et sur lequel est monté à rotation le pignon intermédiaire. L'une 18a, des extrémités du ressort 18 fait saillie dans un évidement central 10a du pignon 10 et coopère avec des moyens de butée formés dans cet évidement, pour freiner la rotation du pignon.

Dans le mode de réalisation représenté, ces moyens de butée sont constitués par au moins un bossage 10b du pignon intermédiaire, dirigé vers l'axe de rotation de celui-ci.

Ce bossage coopère donc avec l'extrémité du ressort pour freiner la rotation du pignon intermédiaire 10 et du boîtier 6, en serrant le ressort 18 autour du téton 19 dans le sens d'un déroulement de la sangle.

Il est également à noter que lorsque le pignon intermédiaire a tendance à tourner en sens inverse, le bossage coopère également avec l'extrémité du ressort pour détendre celui-ci et permettre une rotation de l'ensemble autour du téton, le ressort exerçant tout de même une petite force de freinage sur le pignon intermédiaire en raison du frottement de ce ressort sur le téton.

Dans le mode de réalisation représenté, le pignon intermédiaire comporte quatre bossages de même dimension destinés à exercer une force de freinage constante sur le pignon intermédiaire dans le sens d'un déroulement de la sangle. En effet, lorsque le ressort 7 est totalement enroué autour de son axe et que la traction sur la sangle devient trop importante, l'extrémité 18a du ressort se déforme de manière à laisser passer les bossages du pignon intermédiaire et donc permettre sa rotation et celles du boîter et de la bobine porte-sangle dans les sens d'un déroulement de la sangle, jusqu'à ce que celle-ci soit en position accrochée et/ou que la traction sur la sangle soit insuffisante pour entraîner une déformation de cette extrémité 18a du ressort 18.

Selon un autre mode de réalisation non représenté, le ressort et/ou les moyens de butée sont dimensionnés de manière à exercer une force de freinage croissante sur le pignon intermédiaire en fonction de la rotation de celui-ci. Ainsi par exemple, les bossages peuvent être dimensionnés de manière différente, de sorte que plus le pignon intermédiaire tourne autour du téton 19 et donc du ressort 18, bloqué sur celui-ci, plus il devient difficile aux bossages de franchir l'extrémité 18a du ressort, ce qui se traduit, pour l'utilisateur, par un effort croissant à exercer pour extraire totalement la sangle, ce qui n'est généralement pas nécessaire.

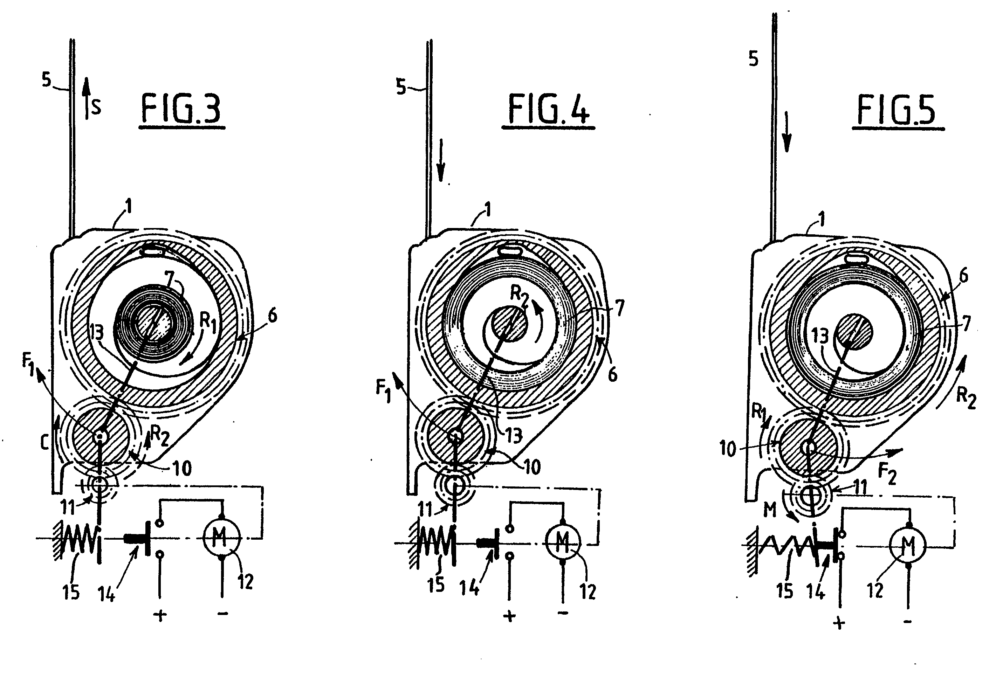

Le fonctionnement d'un tel dispositif va maintenant être décrit en regard des Fig.3, 4 et 5 sur lesquelles la platine 13 a été représentée schématiquement par un trait mixte et les moyens d'alimentation du moteur de façon schématique pour des raisons de compréhension.

Dans la Fig.3, qui illustre une phase de déroulement de la sangle pour amener le pêne de celle-ci en regard de la boucle en vue de son accrochage, un effort S est exercé sur la sangle, ce qui entraîne une rotation suivant R1 de la bobine de l'enrouleur. Le ressort spiral 7, relié à l'une de ses extrémités à cette bobine et à l'autre de ses extrémités, au boîtier 6, s'enroule sous contrainte autour de son axe car, comme il a été décrit précédemment, le pignon intermédiaire 10 comporte des moyens de freinage de sa rotation et donc de celle du boîtier lors du déroulement de la sangle. Ces moyens de freinage engendrent donc un couple résistant C à la force tendant à entraîner une rotation suivant R2 du pignon intermédiaire 10, ce couple résistant pouvant être constant ou croissant en fonction du déroulement de la sangle comme cela été mentionné précédemment.

Le boîtier 6 étant sollicité en roation suivant R1 par le ressort spiral 7 et le pignon intermédiaire 10 étant bloqué à rotation par rapport au boîtier 6, la platine 13, sur laquelle est monté le pignon intermédiaire 10, est alors sollicitée suivant F1, entraînant le moteur 12 et le pignon 11 solidaire de l'arbre de sortie de celui-ci, vers sa position de désactivation du moteur électrique dans laquelle la force exercée par le ressort 15, sollicitant la platine 13 vers sa position d'activation du moteur électrique 12, est inférieure à la force exercée sur la platine par la sangle 5 à travers le ressort spiral 7, le boîtier 6 et le pignon intermédiaire 10.

Lorsque le ressort 7 s'est totalement enroulé autour de son axe, la sollicitation suivant R2 du pignon intermédiaire devient supérieure à la valeur du couple résistant C exercé sur le pignon intermédiaire par les moyens de freinage décrits précédemment. Ceux-ci autorisent alors une rotation du pignon intermédiaire autour de son axe entraînant une rotation du pignon 11 et du boîtier 6 de manière à permettre un déroulement complet de la sangle.

Lorsque le pêne est accroché dans la boucle, la sangle est relâchée. Il y a donc lieu à cet instant de réenrouler l'excédent de sangle de manière à mettre celle-ci sous une tension suffisante pour assurer sa fonction de sécurité sans gêner l'utilisateur.

La sangle étant relâchée, la bobine est soumise à l'effort du ressort 7 enroulé dans la phase précédente autour de son axe. Le ressort 7 se détend donc entraînant une rotation suivant R2 (Fig.4) de la bobine, le boîtier 6 étant toujours freiné en rotation par le pignon intermédiaire 10. Lors de cette opération, la platine 13 est toujours sollicitée suivant F1 vers sa position de désactivation du moteur électrique. L'enroulement de la sangle se poursuit jusqu'à ce que la tension de la sangle soit en équilibre avec la force exercée sur la bobine par le ressort 7.

Lorsque le pêne est retiré de la boucle, la sangle doit être réenroulée en totalité autour de la bobine. Ainsi, comme il est représenté sur la Fig.5, la sangle est totalement relâchée, ce qui entraîne une détente totale du ressort spiral 7. Le pignon intermédiaire 10 et la platine 13 ne sont donc plus sollicités suivant F1 vers la position de désactivation du moteur par le boîtier 6, mais au contraire l'action suivant F2 du ressort 15 entraîne un déplacement de la platine 13 et donc du pignon intermédiaire 10 et du pignon 11, vers la position d'activation du moteur électrique par l'intermédiaire du bouton poussoir 14 qui est alors fermé. Le contact électrique d'alimentation du moteur électrique étant établi, celui-ci est mis en rotation suivant M entraînant une rotation suivant R1 du pignon intermédiaire 10 et une rotation suivant R2 du boîtier 6 autour de l'axe de la bobine. La transmission de ce mouvement de rotation entre le boîtier 6 et la bobine porte-sangle pour enrouler la sangle se fait par l'intermédiaire du ressort spiral 7 qui, par exemple lorsque la sangle est totalement enroulée sur la bobine, se met sous tension et provoque un déplacement du pignon intermédiaire 10 par rapport au boîtier 6 entraînant ainsi un déplacement de la platine 13 vers sa position de désactivation du moteur électrique.

On constate donc que le ressort spiral 7 ne constitue que des moyen de tension de la sangle et non plus des moyens d'enroulement complet de celle-ci sur la bobine, cette fonction étant réalisée par l'intermédiaire du moteur électrique 12, du pignon 11, du pignon intermédiaire 10, du boîtier 6 et du ressort spiral 7.

Le ressort spiral 7 peut ainsi être réduit par rapport aux ressorts des dispositifs connus de sorte que la tension exercée par celui-ci sur la sangle est beaucoup moins gênante pour l'utilisateur.

Enfin, il va de soi que d'autres modes de réalisation notamment des moyens d'actionnement du bouton poussoir d'alimentation du moteur peuvent être envisagés. Ainsi, par exemple, il est possible d'utiliser un ressort travaillant en compression pour solliciter la platine vers sa position d'activation du moteur électrique et le bouton poussoir peut être fixé sur la structure de support et non pas sur la platine comme cela est resprésenté.

## Revendications

1. Enrouleur de sangle de ceinture de sécurité, du type comportant une structure de support (1) dans laquelle est montée à rotation une bobine (2) porte-sangle reliée à des moyens de sécurité et de verrouillage (3) de la sangle (5) et à des moyens de rappel (4) de la sangle (5) en position enroulée sur la bobine (2) où ces moyens de rappel (4) comportent un boîtier cylindrique (6) monté à rotation autour de l'axe de ladite bobine (2) et dans lequel est disposé un ressort spiral (7) de tension de la sangle (5), dont une extrémité est fixée sur l'arbre (8) de rotation de la bobine (2) et dont l'autre extrémité est solidaire du boîtier (6), ledit boîtier (6) comportant sur sa périphérie extérieure des moyens d'engrenage (9) coopérant avec un pignon intermédiaire (10) lui-même en prise avec un pignon (11) fixé sur l'arbre de sortie d'un moteur électrique (12) et où ce pignon intermédiaire (10) est sollicité élastiquement vers la bobine (2) et est mobile entre une position d'activation et une position de désactivation de ce moteur (12), enrouleur caractérisé en ce que le moteur électrique (12) et le pignon intermédiaire (10) sont portés par une platine (13) montée déplaçable angulairement autour de l'axe de la bobine (2) entre la position de désactivation du moteur électrique et la position d'activation de celui-ci (12) et donc d'enroulement de la sangle (5) sur la bobine (2), vers laquelle la platine (13) est sollicitée élastiquement à l'encontre d'une force exercée sur celle-ci par la tension de la sangle (5) par l'intermédiaire du ressort spiral (7) et du boîtier (6), en réponse à un relâchement de la tension imprimée au ressort (7) par la sangle (5).

2. Enrouleur selon la revendication 1, caractérisé en ce qu'il comporte des moyens de freinage de la rotation du boîtier (6).

3. Enrouleur selon la revendication 2, caractérisé en ce que lesdits moyens de freinage sont constitués par des moyens (17) de freinage de la rotation du pignon intermédiaire (10).

4. Enrouleur selon la revendication 3, caractérisé en ce que lesdits moyens de freinage sont constitués par un ressort hélicoïdal (18) disposé autour d'un téton (19) fixé sur la platine (13), et sur lequel est monté à rotation le pignon intermédiaire (10), l'une (18a) des extrémités du ressort (18) faisant saillie dans un évidement central (10a) du pignon (10) et coopérant avec des moyens de butée formés dans cet évidement, pour freiner la rotation dudit pignon.

5. Enrouleur selon la revendication 4, caractérisé en ce que les moyens de butée sont constitués par au moins un bossage (10b) dirigé vers l'axe de rotation du pignon (10).

6. Enrouleur selon la revendication 4 ou 5, caractérisé en ce que ledit ressort (18) et/ou les moyens de butée sont dimensionnés de manière à exercer une force de freinage constante sur le pignon intermédiaire (10) dans le sens d'un déroulement de la sangle.

7. Enrouleur selon la revendication 4 ou 5, caractérisé en ce que ledit ressort (18b) et/ou les moyens de butée sont dimensionnés de manière à exercer une force de freinage croissante sur le pignon intermédiaire (10) en fonction de la rotation de celui-ci dans le sens d'un déroulement de la sangle.

8. Enrouleur selon l'une quelconque des revendications précédentes, caractérisé en ce que la platine (13) est sollicitée vers sa position d'activation du moteur électrique (12) par un ressort (15) dont l'une des extrémités coopère avec la structure de support (1) et l'autre avec la platine (13).

9. Enrouleur selon l'une quelconque des revendication précédentes, caractérisé en ce qu'il comporte un bouton poussoir (14) d'alimentation du moteur (12) actionné par ladite platine (13) en fonction des déplacements de celle-ci.

## Claims

1. Safety belt strap winder, of the type comprising a support structure (1) in which is rotatably mounted a strap-carrying reel (2) connected to safety and locking means (3) for the strap (5) and to means (4) for returning the strap (5) to a position wound on the reel (2), these return means (4) comprising a cylindrical housing (6) rotatably mounted about the axis of the said reel (2) and in which is disposed a spiral spring (7) for putting the strap (5) under tension, having one end fixed to the rotatable shaft (8) of the reel (2) and the other end secured to the housing (6), the said housing (6) comprising on its outer periphery gear means (9) cooperating with an intermediate pinion (10) which is in turn meshed with a pinion (11) fixed to the output shaft of an electric motor (12), this intermediate pinion (10) being elastically biased towards the reel (2) and being movable between a position for activating and a position for deactivating this motor (12), which winder is characterized in that the electric motor (12) and the intermediate pinion (10) are carried by a plate (13) which is mounted to be angularly displaceable about the axis of the reel (2) between the position for deactivating the electric motor (12) and the position for activating the latter and therefore the winding of the strap (5) on the reel (2), towards which activating position the plate (13) is elastically biased in opposition to a force exerted thereon by the tension of the strap (5) via the spiral spring (7) and the housing (6), in response to a slackening of the tension imparted to the spring (7) by the strap (5).

2. Winder according to Claim 1, characterized in that it comprises means for braking the rotation of the housing (6).

3. Winder according to Claim 2, characterized in that the said braking means consist of means (17) for braking the rotation of the intermediate pinion (10).

4. Winder according to Claim 3, characterized in that the said braking means consist of a helical spring (18) disposed around a stud (19) which is fixed to the plate (13) and on which the intermediate pinion (10) is rotatably mounted, one (18a) of the ends of the spring (18) projecting into a central recess (10a) in the pinion (10) and cooperating with abutment means formed in this recess for braking the rotation of the said pinion.

5. Winder according to Claim 4, characterized in that the abutment means consist of at least one boss (10b) directed towards the axis of rotation of the pinion (10).

6. Winder according to Claim 4 or 5, characterized in that the said spring (18) and/or the abutment means are so dimensioned as to exert a constant braking force on the intermediate pinion (10) in the direction of the unwinding of the strap.

7. Winder according to Claim 4 or 5, characterized in that the said spring (18) and/or the abutment means are so dimensioned as to exert an increasing braking force on the intermediate pinion (10) as a function of the rotation of the latter in the direction of the unwinding of the strap.

8. Winder according to any one of the preceding claims, characterized in that the plate (13) is biased towards its position for activating the electric motor (12) by a spring (15), having one end which cooperates with the support structure (1) and the other with the plate (13).

9. Winder according to any one of the preceding claims, characterized in that it comprises a pushbutton (14) for the supply of power to the motor (12), actuated by the said plate (13) as a function of the displacements of the latter.

## Patentansprüche

1. Sicherheitsgurtaufroller mit einem Trägerkörper (1), in dem drehbar eine den Gurt tragende Spule (2) montiert ist, die mit Einrichtungen (3) zur Sicherung und zur Verriegelung des Gurts (5) und mit Einrichtungen (4) zur Rückholung des Gurts (5) in die auf der Spule (2) aufgerollte Stellung verbunden ist, die aus einem zylindrischen Gehäuse (6) bestehen, das drehbar um die Achse der Spule (2) montiert ist und in der eine Spiralfeder (7) zum Spannen des Gurts (5) angeordnet ist, deren eines Ende an der die Spule (2) antreibenden Welle (8) und deren anderes Ende an dem Gehäuse (6) befestigt ist, wobei das Gehäuse (6) an seinem Außenumfang eine Verzahnung (9) aufweist, die mit einem Zwischenzahnrad (10) zusammenwirkt, das seinerseits mit einem auf der Ausgangswelle eines Elektromotors (12) befestigten Zahnrad (11) in Eingriff ist, und das Zwischenzahnrad (10) elastisch in Richtung auf die Spule (2) zu beaufschlagt ist und zwischen einer Stellung, in der der Elektromotor (12) in Betrieb ist, und einer Stellung, in der er außer Betrieb ist, beweglich ist, dadurch gekennzeichnet, daß der Elektromotor (12) und das Zwischenzahnrad (10) von einer Platte (13) getragen werden, die winkelmäßig um die Achse der Spule (2) zwischen der Stellung, in der der Elektromotor (12) außer Betrieb ist, und der Stellung beweglich montiert ist, in der der Motor (12) in Betrieb ist und somit der Gurt (5) auf die Spule (2) aufgerollt wird und auf welche zu die Platine (13) elastisch entgegen einer durch die Spannung des Gurts (5) über die Spiralfeder (7) und das Gehäuse (6) auf sie ausgeübten Kraft beaufschlagt wird, und zwar infolge eines Nachlassens der der Feder (7) durch den Gurt (5) verliehenen Spannung.

2. Aufroller nach Anspruch 1, gekennzeichnet durch Einrichtungen zum Bremsen der Drehung des Gehäuses (6).

3. Aufroller nach Anspruch 2, dadurch gekennzeichnet, daß die Bremseinrichtungen aus Einrichtungen (17) zum Bremsen der Drehung des Zwischenzahnrads (10) bestehen.

4. Aufroller nach Anspruch 3, dadurch gekennzeichnet, daß die Bremseinrichtungen aus einer Schraubenfeder (18) bestehen, die auf einem Zapfen (19) sitzt, der an der Platte (13) befestigt ist und auf dem das Zwischenzahnrad (10) drehbar montiert ist, wobei eines (18a) der Enden der Feder (18) in eine zentrale Aussparung (10a) des Zahnrads (10) hineinragt und mit in dieser Aussparung gebildeten Anschlagseinrichtungen zusammenwirkt, um die Drehung des Zahnrads zu bremsen.

5. Aufroller nach Anspruch 4, dadurch gekennzeichnet, daß die Anschlagseinrichtungen aus mindestens einer Erhebung (10b) bestehen, die auf die Drehachse des Zahnrads (10) zu gerichtet ist.

6. Aufroller nach Anspruch 4 oder 5, dadurch gekennzeichnet, daß die Feder (18) und/oder die Anschlagseinrichtungen so bemessen sind, daß sie eine konstante Bremskraft auf das Zwischenzahnrad (10) in Richtung eines Abrollens des Gurts ausüben.

7. Aufroller nach Anspruch 4 oder 5, dadurch gekennzeichnet, daß die Feder (18b) und/oder die Anschlagseinrichtungen so bemessen sind, daß sie auf das Zwischenzahnrad (10) eine Bremskraft ausüben, die in Abhängigkeit von dessen Drehung in Richtung eines Abrollens des Gurts zunimmt.

8. Aufroller nach einem der vorhergehenden Ansprüche, dadurch gekennzeichnet, daß die Platte in Richtung der Stellung, in der der Elektromotor (12) in Betrieb ist, durch eine Feder (15) beaufschlagt ist, deren eines Ende mit dem Trägerkörper (1) und deren anderes Ende mit der Platte (13) zusammenwirkt.

9. Aufroller nach einem der vorhergehenden Ansprüche, gekennzeichnet durch einen Druckknopf (14) zur Speisung des Motors (12), der durch die Platte (13) je nach ihren Bewegungen betätigt wird.

FIG.1

FIG.2

FIG.3   FIG.4   FIG.5

EP 0 255 788 B1